# EUROPEAN PATENT APPLICATION

(11) **EP 3 879 274 A1**
(43) Date of publication of application: **15.09.2021**
(21) Application number: 20162913.6
(22) Date of filing: 13.03.2020
(51) Int. Cl.: G01N 35/00, G01N 35/04, G01N 35/10

(54) **A SAMPLE PROCESSING SYSTEM FOR PROCESSING LIQUID SAMPLES**

(71) Applicant: Roche Diagnostics GmbH, 68305 Mannheim (DE); F. Hoffmann-La Roche AG, 4070 Basel (CH)
(72) Inventor: The designation of the inventor has not yet been filed
(74) Representative: Altmann Stößel Dick Patentanwälte PartG mbB

(57) **Abstract**

A sample processing system (110) for processing liquid samples is disclosed. The sample processing system (110) comprising:
i. at least one primary track (112) moving at least one primary sample vessel (122) in a first direction (124) through a transfer region (126);
ii. at least one secondary track (114) moving at least one secondary sample vessel (130) in a second direction (132) through the transfer region (126), the second direction (132) having at least one directional component opposing the first direction (124);
iii. at least one automatic pipettor module (116) for liquid transfer between the primary sample vessel (122) and the secondary sample vessel (130) or vice versa in the transfer region (126);
iv. at least one analyzer (118) operably connected to the secondary track (114) downstream the transfer region (126), the analyzer (118) being configured for analyzing a content of the secondary sample vessel (130) after passing the transfer region (126); and
v. at least one secondary sample vessel feeding station (120) for automatically feeding the secondary sample vessel (130) into the secondary track (114).

Further, a method of processing liquid samples is disclosed.

## Description

### Technical Field

The invention relates to a sample processing system and a method for processing liquid samples. The devices and methods of the present invention, as an example, may be used for processing a liquid sample of a bodily fluid, such as blood, blood plasma, blood serum, urine, saliva or other types of bodily fluids, specifically as a pre-analytic step before performing an analysis on the liquid sample of the bodily fluid. Other types of applications comprising the processing of liquid samples are also feasible.

### Background art

In the field of medical or chemical laboratories, liquid samples, such as liquid samples of chemical or biological sample, often are systematically and automatically subjected to analysis, generally by using automated analytic instruments and systems. In some cases, at least one pre-analytic step has to be performed prior to analysis of the liquid samples.

Generally, devices and methods are known to the skilled person which make use of automatic pre-analytic instruments. These pre-analytic instruments perform at least one pre-analytic step, for example for blood screening institutes and for plasma separation labs, by applying pooling before doing a nucleic acid test (NAT) analysis and/or other kinds of analysis. Pooling specifically may refer to the testing of one or more of blood, blood plasma, blood serum donations by combining several donations into one single tube. Typically, a pre-analytic instrument is used which is often referred to as a "pooler", which allows the pooling of the contents of donation tubes into one or more pool tubes, which then are tested on the analyzer.
As an example, US 5,814,276 discloses an automated blood sample processing system having a primary test tube loader in which primary test tubes having blood samples are placed, a conveyor system for moving test tubes in selectable routes, a centrifuge, a secondary test tube loading area in which empty secondary test tubes are loaded for transportation by the conveyor system, a pipetting system into which primary test tubes and empty secondary test tubes are moved by the conveyor system, the pipetting system serving to aliquot centrifuged samples from each of the primary test tubes into a selected number of secondary test tubes, a bar code printer for printing and attaching a bar code label to each of the secondary test tubes, a capper system into which the secondary test tubes are moved by the conveyor system for attaching a cap to each of the secondary test tubes and a sortation system in which the secondary test tubes are moved by the conveyor system and in which the secondary test tubes are sorted into separate slots in a sortation tray, the secondary test tubes being available for removal from the sortation tray slots for subsequent processing. The system may also include a printer for requisitions disclosing patient demographic and requisition information for use in dispatching batches of labeled secondary tubes.

US 5,795,784 provides methods of performing a process for determining an item of interest in a sample. In one embodiment, a container for holding the sample is accepted in a process lane where a process step is selectively automatically performed on the sample in the container. The process step is selectively automatically performed on the sample in the container. An effective length of the process lane is maintained constant while a physical length of the process lane is selectively varied.

US 2008/0069730 A1 discloses a specimen preprocessing/transport apparatus including a test tube transport path on which test tubes filled with specimens are held in test tube holders and transported, a rack transport path on which sample cups are held in a sample cup rack and the rack is transported, a filled-tube loading section which loads the test tubes into the test tube transport path, a rack loading section which loads the sample cup rack into the rack transport path, an aliquoting/dispensing device which is located in the middle of the test tube transport path and configured to simultaneously aliquot the specimens in the test tubes, and simultaneously dispense the sample cups on the rack transport path, and an analyzer which is located on the downstream side of the rack transport path and configured to receive the sample cup rack stored with the specimens and analyze the specimens.

Despite the advantages achieved by the known methods and devices, several technical challenges remain. Specifically, when using conventional automated poolers, typically, only batch loading of primary samples is possible. Further, the batch handling of primary sample often causes inefficient pipetting, specifically being limited by the pipetting head movements. In case of a reactive pool, the operator often is required to manually search for all the donation tubes which are included in this pool. The operator further often is required to put the individual donors on the NAT analyzer for testing. Thus, a deconstruction of the pool may be necessary.

Further, known devices and methods generally have a big footprint. Usually, the initial batches loaded into the pooler need to be grouped together until the result of the tested pool tube is available. Thus, the batches will have to remain on a table or a rack next to the pre-analytic instrument. Another technical challenge often remains in the fact that, general preparation of the samples in the rack, such as de-capping and/or positioning, has to be performed manually by the operator of the instrument. Manual handling of the tubes, however, raises the risk of accidents, errors and faulty operation, for example by spilling of sample material. Further, in these devices, the barcodes of the tubes often have to be read repeatedly, for example when entering the instrument.

### Problem to be solved

It is therefore desirable to provide a method and a sample processing system for processing liquid samples which at least partially address the above-mentioned technical challenges of known methods and devices of similar kind. Specifically, methods and devices shall be proposed which allow for a user-friendly, efficient and safe handling of liquid samples, specifically in a fully automatic manner.

### Summary

This problem is addressed by a method and a sample processing system for processing liquid samples with the features of the independent claims. Advantageous embodiments which might be realized in an isolated fashion or in any arbitrary combinations are listed in the dependent claims and throughout the specification.

As used in the following, the terms "have", "comprise" or "include" or any arbitrary grammatical variations thereof are used in a non-exclusive way. Thus, these terms may both refer to a situation in which, besides the feature introduced by these terms, no further features are present in the entity described in this context and to a situation in which one or more further features are present. As an example, the expressions "A has B", "A comprises B" and "A includes B" may both refer to a situation in which, besides B, no other element is present in A (i.e. a situation in which A solely and exclusively consists of B) and to a situation in which, besides B, one or more further elements are present in entity A, such as element C, elements C and D or even further elements.

Further, it shall be noted that the terms "at least one", "one or more" or similar expressions indicating that a feature or element may be present once or more than once typically will be used only once when introducing the respective feature or element. In the following, in most cases, when referring to the respective feature or element, the expressions "at least one" or "one or more" will not be repeated, non-withstanding the fact that the respective feature or element may be present once or more than once.

Further, as used in the following, the terms "preferably", "more preferably", "particularly", "more particularly", "specifically", "more specifically" or similar terms are used in conjunction with optional features, without restricting alternative possibilities. Thus, features introduced by these terms are optional features and are not intended to restrict the scope of the claims in any way. The invention may, as the skilled person will recognize, be performed by using alternative features. Similarly, features introduced by "in an embodiment of the invention" or similar expressions are intended to be optional features, without any restriction regarding alternative embodiments of the invention, without any restrictions regarding the scope of the invention and without any restriction regarding the possibility of combining the features introduced in such way with other optional or non-optional features of the invention.

In a first aspect of the invention, a sample processing system for processing liquid samples, specifically liquid samples of a bodily fluid, is disclosed. The sample processing system comprises:
i. at least one primary track moving at least one primary sample vessel in a first direction through a transfer region;
ii. at least one secondary track moving at least one secondary sample vessel in a second direction through the transfer region, the second direction having at least one directional component opposing the first direction;
iii. at least one automatic pipettor module for liquid transfer between the primary sample vessel and the secondary sample vessel or vice versa in the transfer region;
iv. at least one analyzer operably connected to the secondary track downstream the transfer region, the analyzer being configured for analyzing a content of the secondary sample vessel after passing the transfer region; and
v. at least one secondary sample vessel feeding station for automatically feeding the secondary sample vessel into the secondary track.

The term "sample processing system" as used herein is a broad term and is to be given its ordinary and customary meaning to a person of ordinary skill in the art and is not to be limited to a special or customized meaning. The term specifically may refer, without limitation, to an arbitrary system comprising at least one component configured for performing at least one function of processing, specifically of processing liquid samples. In particular, the sample processing system comprises a plurality of components which are configured for interacting together to perform the at least one function of processing liquid samples. As another example, each of the components of the sample processing system may be configured for performing the at least one function of processing liquid samples and thus, the sample processing system is configured for performing a plurality of different functions of processing liquid samples. The sample processing system may specifically be configured for automatically processing liquid samples, specifically for processing liquid sample individually, such as one liquid sample after another and/or a plurality of liquid samples simultaneously. For example, the sample processing system may comprise at least one control unit configured for controlling the at least one function of the sample processing system. Consequently, the term "processing liquid sample" as used herein is a broad term and is to be given its ordinary and customary meaning to a person of ordinary skill in the art and is not to be limited to a special or customized meaning. The term specifically may refer, without limitation, to one or more of handling, moving, transferring, mixing, separating, cleaning and/or analyzing liquid samples.

The term "liquid sample" as used herein is a broad term and is to be given its ordinary and customary meaning to a person of ordinary skill in the art and is not to be limited to a special or customized meaning. The term specifically may refer, without limitation, to an aliquot of a fluid substance, such as a chemical or biological substance. For example, the liquid sample may be or may comprise at least one pure liquid, such as a liquid substance and/or a solution containing one or more liquid substances, comprising the at least one chemical and/or the biological substance. As another example, the liquid sample may be or may comprise a liquid mixture, such as a suspension, an emulsion and/or a dispersion of one or more chemical and/or biological substances. In particular, the liquid sample may be or may comprise at least one bodily fluid, such as one or more of the bodily fluids mentioned above or mentioned in further detail below. Further, the liquid sample may comprise, besides the bodily fluid, one or more chemical substances necessary to perform at least one analysis with the liquid sample, as will be outlined in further detail below.

The term "bodily fluid" as used herein is a broad term and is to be given its ordinary and customary meaning to a person of ordinary skill in the art and is not to be limited to a special or customized meaning. The term specifically may refer, without limitation, to an arbitrary fluid comprising at least one biologic component. Specifically, the biologic component may be or may comprise at least one fluidic component extracted from a human body. For example, the bodily fluid may be or may comprise at least one aliquot of one or more bodily fluids selected from the group consisting of: blood; blood serum; blood plasma; lysed whole blood; saliva; urine.

The term "track" as used herein is a broad term and is to be given its ordinary and customary meaning to a person of ordinary skill in the art and is not to be limited to a special or customized meaning. The term specifically may refer, without limitation, to an arbitrary device which is configured for transporting, transferring and/or carrying objects from one position to another. Specifically, the primary and secondary tracks, respectively, may be configured for transporting the primary and secondary sample vessels through the sample processing system. As an example, the primary and secondary tracks each may comprise at least one vessel carrier, specifically configured for receiving and carrying the primary and secondary vessels, respectively. Specifically, the primary and secondary vessels may be transported individually through the sample processing system via the primary and secondary tracks, respectively, such as one sample vessel after another and/or a plurality of sample vessels simultaneously. The primary and secondary tracks each, independently, may be or may comprise at least one of: a conveyor, such as a belt conveyor or a chain conveyor; a vehicle system, such as an electronic vehicle system. Further, the sample processing system may comprise at least one motor which is configured for driving the primary and/or secondary tracks. As used herein, the terms "primary" and "secondary" are used for the purpose of nomenclature only, without ranking or numbering these tracks or without giving any preferences. Further, this numbering does not refer to a specific number or order of items.

The term "moving a sample vessel" as used herein is a broad term and is to be given its ordinary and customary meaning to a person of ordinary skill in the art and is not to be limited to a special or customized meaning. The term specifically may refer, without limitation, to one or more of transporting, transferring or carrying a sample vessel, specifically the primary and secondary sample vessel, from one position in the sample processing system to another. Specifically, the primary and secondary sample vessel may be moved automatically by the sample processing system, specifically by the primary and secondary track, respectively. The movement of the primary and secondary track, and thus, the movement of the primary and secondary sample vessel may be described by a moving direction, such as by a first and second direction, respectively.

The term "first direction" as used herein is a broad term and is to be given its ordinary and customary meaning to a person of ordinary skill in the art and is not to be limited to a special or customized meaning. The term specifically may refer, without limitation, to a moving direction of the primary track, such as tangential direction of the primary track in at least one representative point or path section of the primary track. The first direction may be described by at least one first directional vector or a group of vectors indicating the moving direction of the primary track within the transfer region. The at least one first directional vector may be a two- or three-dimensional vector pointing in the first direction. Thus, the first directional vector may comprise at least two directional components.

Consequently, the term "second direction" as used herein may refer, without limitation, to a moving direction of the secondary track. The term specifically may refer, without limitation, to a moving direction of the secondary track, such as tangential direction of the secondary track in at least one representative point or path section of the secondary track. The second direction may be described by at least one second directional vector or a group of vectors indicating the moving direction of the secondary track within the transfer region. The at least one second directional vector may be a two- or three-dimensional vector pointing in the second direction. Thus, the second directional vector may comprise at least two directional components.

As outlined above, the secondary sample vessel is moved through the transfer region in the second direction. Therein, the second direction has at least one directional component opposing the first direction. Thus, in the transfer region, the primary and secondary tracks may be designed such that the primary and secondary sample vessels, moving in the first and second direction, respectively, pass each other in opposite directions or in directions having at least one directional component opposing each other. Thus, the primary and secondary sample vessels, when being positioned in predetermined points within the transfer region, when being positioned in respective positions in which the primary and secondary sample vessels are closest to one another, or when being positioned in pipetting positions in which the liquid transfer of step iii. takes place between the vessels, may be positioned such that tangential vectors of a respective path segment of the primary and secondary tracks have at least one directional component opposing each other, such that the tangential vectors enclose an angle of e.g. 260° to 80°, such as an angle of 240° to 60°, e.g. 225° to 45° or even an angle of 180°.

The term "sample vessel" as used herein is a broad term and is to be given its ordinary and customary meaning to a person of ordinary skill in the art and is not to be limited to a special or customized meaning. The term specifically may refer, without limitation, to a receptacle which is configured for one or more of containing, storing and/or transporting a liquid sample, specifically a liquid sample of a bodily fluid. Further, the sample vessel may be configured for being processed in a sample processing system. Specifically, the sample vessel may be used in the field of medical and/or chemical laboratories. For example, the sample vessel may be selected from the group consisting of: a container; a vial; a syringe; a cartridge; an ampoule; a tube. In the following, without restricting further possibilities, the option of a sample tube will be described, wherein the sample tube, as an example, may be positioned in the primary and secondary tracks, respectively, with an open end pointing upwards.

Further, the primary sample vessel may contain the liquid sample, specifically the liquid sample of the bodily fluid, which may initially be provided to the sample processing system. The secondary sample vessel, however, may contain the liquid sample, specifically the liquid sample of the bodily fluid, which was processed by the sample processing system. In particular, the secondary sample vessel may comprise an aliquot, a pool or a splitting of one or more liquid samples comprised by the at least one primary sample vessel, as will be outlined in further detail below. The liquid sample contained by secondary sample vessel may be transferred to the secondary sample vessel from one or more primary sample vessels, specifically by transferring the liquid sample in the transfer region of the sample processing system.

The term "transfer region" as used herein is a broad term and is to be given its ordinary and customary meaning to a person of ordinary skill in the art and is not to be limited to a special or customized meaning. The term specifically may refer, without limitation, to a region of the sample processing system where the primary and secondary tracks converge with each other. Specifically, the primary track and the secondary track may converge in such a way that the automatic pipettor module may transfer liquid from the primary sample vessel to the secondary sample vessel or vice a versa. Thus, the transfer region may comprise the automatic pipettor module to form a junction or a link between the primary and secondary track. Further, the primary and secondary track may move through the transfer region in the first and second direction, respectively, wherein the second direction has at least one directional component opposing the first direction. When the sample transfer takes place, the primary and secondary tracks may temporarily stop, such that, during the sample transfer, the primary and secondary sample vessels temporarily rest, such as in respective transfer positions, as mentioned above.

The term "automatic pipettor module" as used herein is a broad term and is to be given its ordinary and customary meaning to a person of ordinary skill in the art and is not to be limited to a special or customized meaning. The term specifically may refer, without limitation, to a device for repeatedly delivering a predetermined volume of the liquid sample into at least one receptacle. Specifically, the automatic pipettor module may be configured for delivering the predetermined amount of the liquid sample from the at least one primary sample vessel to the secondary sample vessel or vice versa. Thus, the automatic pipettor module may be configured for liquid transfer, specifically between the at least one primary sample vessel and the secondary sample vessel or vice a versa. For example, the automatic pipettor module may transfer the liquid sample contained by one or more of the primary sample vessels into the secondary sample vessel. The pipettor module may comprise one or more pipettes. The automatic pipettor module may be configured for aspiring or intaking at least one aliquot of sample from the at least one primary sample vessel, for transferring the aliquot to the secondary sample vessel and for exhaling the aliquot into the at least one secondary sample vessel. The opposite process for transferring sample from the secondary sample vessel to the primary sample vessel is also possible. The automatic pipettor module may fully or partially transfer the liquid sample contained by the primary sample vessel into one or more secondary sample vessels or vice versa. Thus, the automatic pipettor module may also be configured for distributing the sample aspired from the primary sample vessel over a plurality of secondary sample vessels or vice versa.

Further, the automatic pipettor module may comprise one or more components which are configured for liquid transfer, such as at least one pipetting module and will be outlined in further detail below. The automatic pipettor module may further operate without biological or chemical contamination, and, thus, may be internally sealed from the environment and may specifically be designed for easy cleaning and/or sterilization before liquid transfer. Thus, the automatic pipettor module may enable a liquid transfer while minimizing the risk of possible cross-contaminations between different liquid samples. The automatic pipettor module may comprise at least one pump connected to the at least one pipetting module, wherein the pump may be configured for initiating an intake and a release of the liquid sample. The automatic pipettor module may also comprise at least one microcontroller for regulating one or more of a speed and the volume of the liquid sample.

The term "liquid transfer" as used herein is a broad term and is to be given its ordinary and customary meaning to a person of ordinary skill in the art and is not to be limited to a special or customized meaning. The term specifically may refer, without limitation, to an action of taking in the liquid sample from one sample vessel and releasing the liquid sample into another sample vessel or vice versa. Specifically, the liquid sample may be transferred from one or more primary sample vessels into one or more secondary sample vessels or vice versa. The liquid transfer may take place in the transfer region of the sample processing system, specifically by using the automatic pipettor module. Thus, the automatic pipettor module may specifically be configured for transferring liquid from one sample vessel into another sample vessel.

The term "analyzer" as used herein is a broad term and is to be given its ordinary and customary meaning to a person of ordinary skill in the art and is not to be limited to a special or customized meaning. The term specifically may refer, without limitation, to an analytical device configured for analyzing the liquid sample or a part thereof. Specifically, the analyzer may analyze a content of the liquid sample contained in the secondary sample vessel. As used herein, the term "analyzing" may refer to the action of performing at least one analytical measurement with the liquid sample, specifically at least one measurement for performing qualitatively and/or quantitatively determining at least one analytical parameter of the liquid sample or of a part thereof. The at least one analytical parameter specifically may be or may comprise information on a content of at least one component of the sample, such as a concentration. Additionally or alternatively, the at least one analytical parameter may also refer to at least one nucleic acid test. Thus, the analytical measurement may be or may comprise an analytical test, and, thus, may result in a qualitative or quantitative analytical result. For example, the analyzer may be or may comprise at least one nucleic acid test (NAT) analyzer. Thus, the analytical measurement may detect a particular nucleic acid sequence comprised by the analyzed liquid sample and the analytical result may comprise the presence or absence of the particular nucleic acid in the analyzed sample. Further, the NAT analyzer may also be configured for detecting a plurality of particular nucleic acid sequences, for example by subsequently repeating a NAT measurement for the plurality of particular nucleic acid sequences. It shall be noted, however, that, additionally or alternatively, one or more other analytical parameters may be determined by the analyzer.

As outlined above, the analyzer is operably connected to the secondary track downstream the transfer region. As used herein, the term "downstream" may refer to an order of passing of the sample vessel determined by the moving direction of the sample vessel. Thus, the secondary sample vessel, transported by the secondary track, may first pass the transfer region, before reaching the analyzer. Specifically, the analyzer being connected to the secondary track downstream the transfer region may refer to a situation where the secondary sample vessel may be transferred through the transfer region before being moved to the analyzer downstream the transfer region.

The term "operably connected" as used herein is a broad term and is to be given its ordinary and customary meaning to a person of ordinary skill in the art and is not to be limited to a special or customized meaning. The term specifically may refer, without limitation, to the fact that the analyzer may be provided with the secondary sample vessels by the secondary track, specifically without the need of human interaction, i.e. automatically.

The term "feeding station" as used herein is a broad term and is to be given its ordinary and customary meaning to a person of ordinary skill in the art and is not to be limited to a special or customized meaning. The term specifically may refer, without limitation, to arbitrary device configured for feeding at least one sample vessel to the sample processing system. As used herein "feeding" specifically may refer, without limitation, to providing the at least one sample vessel to the sample processing system. Specifically, the feeding station may be configured for automatically feeding the at least one sample vessel to the sample processing system. Thus, the feeding station may provide the sample vessel without further ado to the sample processing system. As an example, the feeding station may be configured for providing secondary sample vessels to the secondary track of the sample processing system. In particular, the feeding station may provide empty secondary sample vessels to the vessel carriers of the secondary track. Thus, the feeding station may comprise at least one storage of empty secondary vessels and further at least one means for transferring and inputting the empty secondary vessels into the vessel carriers of the secondary track. Specifically, the secondary sample vessel feeding station may comprise a docking station for docking at least one cassette to the sample processing system, the at least one cassette containing one or more secondary sample vessels, specifically unused, clean or empty secondary sample vessels. Specifically, the cassette may comprise at least 10 or even more empty secondary sample vessels.

Further, the primary and secondary tracks of the sample processing system each may comprise at least one vessel carrier for receiving the primary and secondary sample vessels, respectively. The vessel carrier may receive the primary and secondary sample vessel in an upright position, for example such that the sample processing system may have access to an opening of the primary and secondary sample vessel. Further, the primary and secondary tracks each may comprise transport devices for moving the vessel carriers along the primary and secondary tracks, respectively. The transport devices may be comprised by the primary and the secondary track. The at least one vessel carrier may be a freely moving vessel carrier or may be fixedly or removably connected to at least one transportation device.

As outlined above, the at least one automatic pipettor module may be configured for transferring liquid from one or more primary sample vessels into one or more secondary sample vessels or vice versa. Thus, the at least one automatic pipettor module may comprise at least one pipetting module, specifically a plurality of pipetting modules. The at least one pipetting module may comprise at least one pipetting head transfer line, at least one pipetting head and at least one pipette. The pipetting head transfer line may extend at least from the primary track at least to the secondary track. The pipetting head may be movable along the pipetting head transfer line and the pipette may be connected to the pipetting head. Further, the automatic pipettor module may comprise a plurality of pipetting modules, wherein the plurality of pipetting heads comprised by the plurality of pipetting modules are movable independently from each other.

The sample processing system may further comprise at least one sample buffer for storing one or more primary sample vessels. The at least one primary track may comprise the at least one sample buffer. The sample buffer may be configured for storing one or more primary sample vessels, specifically after being moved through the transfer region. For example, the sample buffer may be or may comprise a storage area for storing a plurality of primary sample vessels. Specifically, the sample buffer may be cooled such that the temperature of the sample buffer may be reduced compared to the temperature of the sample processing system. Additionally or alternatively, the sample buffer may be or may comprise a fridge. The term "sample buffer" as used herein is a broad term and is to be given its ordinary and customary meaning to a person of ordinary skill in the art and is not to be limited to a special or customized meaning. The term specifically may refer, without limitation, to an arbitrary device which is configured for storing one or more primary sample vessels. Thus, as an example, the at least one sample buffer may comprise a cassette or another storage device configured for temporarily storing one or more of the sample vessels. Additionally or alternatively, the sample buffer may be or may comprise a branch or side track of the primary track branching off from a main track of the primary track. Thus, as an example, the sample buffer may comprise a side-track loop bypassing a part of the primary track, wherein primary sample vessels temporarily may be stored in the side track. The sample buffer may be fixedly connected to the sample processing system or may be removable.

As outlined above, the sample processing system may comprise at least one control unit for controlling the functionality of the sample processing system. The term "control unit" as used herein is a broad term and is to be given its ordinary and customary meaning to a person of ordinary skill in the art and is not to be limited to a special or customized meaning. The term specifically may refer, without limitation, to an electronic device configured, specifically by hardware and/or by software programming, for controlling the functionality of the sample processing system. The control unit specifically may comprise at least one processor. The term "processor" as used herein is a broad term and is to be given its ordinary and customary meaning to a person of ordinary skill in the art and is not to be limited to a special or customized meaning. The term specifically may refer, without limitation, to an arbitrary logic circuitry configured for performing basic operations of a computer or system, and/or, generally, to a device which is configured for performing calculations or logic operations. In particular, the processor may be configured for processing basic instructions that drive the computer or system. As an example, the processor may comprise at least one arithmetic logic unit (ALU), at least one floating-point unit (FPU), such as a math coprocessor or a numeric coprocessor, a plurality of registers, specifically registers configured for supplying operands to the ALU and storing results of operations, and a memory, such as an L1 and L2 cache memory. In particular, the processor may be a multicore processor. Specifically, the processor may be or may comprise a central processing unit (CPU). Additionally or alternatively, the processor may be or may comprise a microprocessor, thus specifically the processor's elements may be contained in one single integrated circuitry (IC) chip. Additionally or alternatively, the processor may be or may comprise one or more application-specific integrated circuits (ASICs) and/or one or more field-programmable gate arrays (FPGAs) or the like. For example, the control unit of the sample processing system may be or may comprise at least one computer comprising the at least one processor, such as at least one computer configured for receiving an electronic signal, such as an electronic signal from the reading device as will be outlined in further detail below, and for further evaluating the received signal. Thus, the control unit may be configured for reading the at least one item of information comprised by the identifier. The control unit may further be configured for controlling the movement of the primary and secondary track, specifically independent from each other.

As outlined above, the primary sample vessel may comprise at least one sample of a bodily fluid, specifically at least one of: blood; blood serum; blood plasma; lysed whole blood.

The secondary sample vessel may contain at least one of an aliquot, a pool or a fraction of one or more samples of the bodily fluid comprised by one or more primary sample vessels.

Further, the primary and secondary tracks of the sample processing system may be configured for moving the primary and secondary sample vessels, respectively, through the transfer region in a stepwise fashion, such that, in each step, a group of one or more primary sample vessels may be assigned to a group of one or more secondary vessels in the transfer region. Thus, the primary and secondary tracks may move with a primary and a secondary stepping frequency, respectively. The control unit of the sample processing system may be configured for controlling the primary and secondary stepping frequency of the primary and secondary track, respectively, specifically independently from each other.

Thus, a relative ratio of the primary to the secondary stepping frequency may at least partially determine the functionality of the sample processing system, specifically with regard to the functionality of pooling, dispensing and/or splitting the liquid sample from the at least one primary sample vessel into the at least one secondary sample vessel or vice versa. For example, if both tracks, the primary and secondary track move with the same stepping frequency, the secondary sample vessel may contain an aliquot of the liquid sample contained by the primary sample vessel. As another example, if the stepping frequency of the primary track is higher than the stepping frequency of the secondary track, the secondary sample vessel may contain a pool of liquid samples contained by a plurality of primary sample vessels. As another example, if the stepping frequency of the primary track is lower than the stepping frequency of the secondary track, the secondary sample vessel may contain a fraction of the liquid sample contained by the primary sample vessel.

As outlined above, the sample processing system comprises the at least one analyzer operably connected to the secondary track. The at least one analyzer may comprise at least one of: a nucleic acid test analyzer; a nucleic acid amplification test analyzer.

Further, at least part of the primary track of the sample processing system may form a self-contained pathway, specifically a loop. Specifically, the primary track may connect the primary sample input with the transfer region and further with the sample buffer. The sample buffer, in turn, may be comprised by the primary track such that primary sample stored in the sample buffer may be transferred to the transfer region.

As outlined above, the primary track and the secondary track move the primary and secondary sample vessel through the sample processing system, respectively. Specifically, the primary and secondary sample vessels may be moved individually through the sample processing system via the primary and secondary tracks, respectively. Further, the primary and secondary sample vessels may comprise at least one of: a sample container; a sample tube; a sample box.

The sample processing system may further comprise one or more identifiers for identifying the primary and secondary sample vessels. For example, the primary and secondary sample vessels may comprise identifiers. As another example, the identifiers may be comprised by the primary and secondary sample vessel carriers. Specifically, the identifiers each may comprise at least one item of information, the item of information being selected from the group consisting of: an item of type information providing information on a type of the liquid sample; an item of identification information providing information for identifying the liquid sample; an item of level information providing information on a level of the liquid sample; an item of composition information providing information of a composition of the liquid sample; an item of status information providing information on a state of the liquid sample.

As an example, the identifiers may comprise at least one of: a barcode; a QR-code; a RFID tag; a GPS code. Thus, the sample processing system may further comprise at least one reading device, specifically at least one of a camera, a barcode reader or an RFID scanner, wherein the reading device is configured for reading the identifiers comprised by the primary and/or secondary sample vessels, respectively. The reading device may specifically be configured for detecting the identifier, retrieving the item of information and providing the item of information via an electronic signal to the control unit of the sample processing system.

The sample processing system may further comprise at least one sample input and at least one sample output in each of the primary and secondary track. The inputs and outputs each may comprise respective ports for entering the vessels into the sample processing system or for taking the sample vessels out of the system, respectively. The inputs and outputs each may comprise docking stations for sample vessel cassettes or the like.

Specifically, the at least one sample input of the primary track may be loadable with the at least one primary sample vessel, specifically manually or automatically, more specifically with the primary sample vessel containing the at least one sample of a bodily fluid. The at least one sample output of the primary track may provide an outlet for the primary sample vessel. Further, the at least one sample input of the secondary track may comprise the at least one secondary sample vessel feeding station, and the sample output of the secondary track may provide a sample waste for the at least one secondary sample vessel, specifically being located downstream the at least one analyzer connected to the secondary track.

Further, the primary and secondary tracks may comprise at least one primary and secondary conveyor tracks, respectively. The primary and secondary conveyor tracks may be configured for moving the vessel carrier along the primary and secondary tracks, respectively.

In a further aspect of the present invention, a method of processing at least one liquid sample is disclosed. The method comprises the following steps which specifically may be performed in the given order. It shall be noted, however, that a different order is also possible. Further, it is also possible to perform one or more of the method steps once or repeatedly. Further, it is possible to perform one or more of the method steps simultaneously or in a timely overlapping fashion. The method may comprise further method steps which are not listed.

The method comprises:
a. providing at least one sample processing system according to the present invention, such as according to any one of the embodiments disclosed above and/or according to any one of the embodiments disclosed in further detail below referring to a sample processing system;
b. providing at least one primary sample vessel to at least one sample input of the primary track, the primary sample vessel containing the liquid sample, specifically a liquid sample of a bodily fluid;
c. moving the primary sample vessel through the transfer region via the primary track;
d. feeding at least one secondary sample vessel automatically into the secondary track by using at least one secondary sample vessel feeding station;
e. moving the secondary sample vessel through at least one transfer region via the at least one secondary track; and
f. pipetting at least part of the liquid sample from at least one primary sample vessel into one or more secondary sample vessels.

The term "method of processing at least one liquid sample" as used herein is a broad term and is to be given its ordinary and customary meaning to a person of ordinary skill in the art and is not to be limited to a special or customized meaning. The term specifically may refer, without limitation, to any method which is suitable for one or more of handling, moving, transferring and/or analyzing liquid samples. Specifically, the method comprises the processing of liquid samples of a bodily fluid. For a possible definition and for optional embodiments of the term "processing", reference may be made to the description of the sample processing system above.

As outlined above, the method specifically may comprise, in step a., providing at least one sample processing system. Specifically, the sample processing system may be a sample processing system according to the present invention, such as according to any one of the embodiments disclosed above and/or according to any one of the embodiments disclosed in further detail below.

In step b. of the method, at least one primary sample vessel is provided to the sample input of the primary track. The primary sample vessel may comprise at least one liquid sample, such as a liquid sample of a bodily fluid. As an example, the primary sample vessel may be provided manually to the sample input of the primary track. As another example, the primary sample vessel may also be provided automatically to the sample input of the primary track. Additionally, step c. may comprise transferring the primary sample vessel from the sample input to the vessel carrier of the primary track.

As outlined above, step c. comprises moving the primary sample vessel via the primary track. Thus, the primary sample vessel may be moved in the vessel carrier of the primary track through the sample processing system, specifically through the transfer region. Specifically, the primary sample vessel may be moved through the transfer region in a first direction and in a stepwise fashion, for example with a primary stepping frequency. Thus, the primary sample vessel may be moved individually through the transfer region via the primary track.

As further outlined above, step d. comprises feeding the secondary sample vessel automatically into the secondary track. Specifically, the secondary sample vessel feeding station may be configured for automatically feeding empty secondary vessel into the secondary track. As an example, the secondary sample vessel feeding station may be configured for transferring secondary sample vessels from a storage to the vessel carrier of the secondary track.

In step e., the secondary sample vessels are moved through the transfer region via the secondary track. Specifically, the secondary sample vessel may be moved through the transfer region in a second direction and in a stepwise fashion, for example with a secondary stepping frequency. Further, the second direction of the secondary sample vessels may comprise at least one directional component opposing the first direction of the primary sample vessels. Thus, the secondary sample vessel may be moved individually through the transfer region via the secondary track.

As further outlined above, the method comprises in step f., pipetting at least part of the liquid sample from at least one primary sample vessel into one or more secondary sample vessels. Thus, step f. may comprise using at least one automatic pipettor module for liquid transfer between the primary and secondary sample vessel.

The method may further comprise:
g. identifying the primary sample vessel by reading at least one identifier assigned to the primary sample vessel.

Specifically, step g. may be performed at least once in advance of step f. of the method. The liquid sample contained by the primary sample vessel may be identified by reading the identifier. Further, the control unit may be configured for controlling the pipetting of at least part of the liquid sample from the at least one primary sample vessel into one or more secondary sample vessels. Thus, the control unit may recognize the composition and/or the volume of the liquid sample contained by the secondary vessel. As an example, the item of composition information on the liquid sample contained by the secondary sample vessel may be assigned to the identifier of the secondary sample vessel.

Further, the method may comprise:
h. storing the at least one primary sample vessel in at least one sample buffer comprised by the primary track.

Specifically, the primary sample vessel may be stored in the sample buffer after passing the transfer region. Thus, the primary sample vessels stored in the sample buffer may be already processed by the sample processing system. Further, the primary sample vessel may be moved from the sample buffer to the transfer region and/or to the sample output of the primary track.

The method may further comprise:
i. moving the secondary sample vessel to the analyzer.

Specifically, the secondary sample vessel may be moved via the secondary track downstream the transfer region to the at least one analyzer. The analyzer may be or may comprise a NAT analyzer.

Further, the method may comprise:
j. analyzing a content of the secondary sample vessel.

In a further aspect of the present invention, a use of the sample processing system is disclosed. The sample processing system is used for a purpose of use selected from the group consisting of: pooling liquid samples from at least one primary sample vessel into at least one secondary sample vessel; dispensing liquid samples from at least one primary sample vessel into at least one secondary sample vessel; splitting liquid samples from at least one primary sample vessel into at least one secondary sample vessel.

In a further aspect of the present invention, a use of the sample processing system is disclosed. The sample processing system is used for a purpose of use selected from the group consisting of: nucleic acid testing; serological testing; immunoassay; blood screening; blood plasma screening; lysed whole blood screening.

As outlined above, the sample processing system comprises at least two tracks, such as at least one primary track and at least one secondary track and at least one automatic pipettor module, which specifically may be configured for connecting the primary track and the secondary track in the transfer region. Further the sample processing system may comprise at least one control unit which is configured for controlling the functionality of the sample processing system.

The primary and secondary track may move at least partially counterclockwise, specifically in the transfer region. The primary track may transport the primary sample vessels, for example the donor tubes, in single vessel carriers which may be identified by the identifier comprising a unique readable ID, for example a RFID, a GPS; a barcode. Further, the primary track may comprise at least one sample buffer for storing primary sample, specifically in case of pool deconstruction. The secondary track may transport the secondary sample vessels, for example the pooling tubes, in single vessel carriers which also may be identified by the identifier comprising a unique readable ID. The at least one analyzer, for example a NAT analyzer, is operably connected to the secondary track. Further, the secondary track may comprise the secondary sample outlet, for example a waste facility, as well as the secondary sample vessel feeding station.

The automatic pipettor module may comprise the at least one pipetting module comprising the pipette connected to the pipetting head performing a linear movement along the pipetting head transfer line at constant speed and distance. The pooling size may be defined by the stepping frequency of the primary and secondary track. For example, if both tracks move at the same stepping frequency, the result may be a 1: 1 dispensing (aliquot). As another example, if the primary track moves faster than the secondary track, the result may be a pool (n:1). As another example, if the secondary track moves faster than the primary track, the result may be a splitting of liquid samples (1:n). The relative ratio n may be defined by the ratio of the stepping frequencies of the primary and secondary track, e.g. pool contains 6, 24, 65, etc.

In order to increase the throughput, multiple connected pipettes may be placed next to each other in a modular way and, thus, the number of pipettes may vary based on the requested throughput.

In case of an already analyzed liquid sample or a detected problem, such as a sample volume missing or a liquid sample containing clots, the control unit may control the pipette such that the liquid sample will not be acted upon. By using the identifier comprising a unique readable ID, an association between the primary sample vessels and the secondary sample vessels may be tracked.

After pipetting at least part of the liquid sample from the primary sample vessels into one or more secondary sample vessels, the primary sample vessels may be automatically transported to the sample buffer, which might be cooled or may be a fridge, and may be stored until the analytical measurement result is obtained. In case of a pool deconstruction, the sample processing system may automatically identify the affected samples and initiate a deconstruction process depending on the pooling size without manually intervention. If the result of the analytical measurement was positive the primary sample vessels may be released from the system for further use or wasting. The secondary sample vessels may be transported to an NAT analyzer for testing. After testing the liquid samples contained by the secondary sample vessels may be automatically wasted.

The methods and device according to the present invention may provide a large number of advantages over similar methods and devices known in the art. Specifically, the devices and methods described herein allow for a user-friendly, efficient and safe handling of liquid samples in a fully automatic manner. Thus, the sample processing system may comprise simple state of the art modules, however, may be suitable for managing complex use cases with the use of different speed tracks and a different number of pipetting modules. Further, after loading the primary samples to the primary sample input, there is no need for further manual interaction.

As another advantage, the deconstruction may be significantly easier and less error-prone. The sample processing system may be field upgradable and, thus, any change of lab configuration does not require an instrument change. Therefore, the sample processing system may allow a flexible use of laboratory space due to a low footprint. The sample processing system may further be used in different lab sizes and may also be integrated on already existing tracking systems.

Further, the danger of a cross contamination between different primary and/or secondary samples may be minimized due to the fact, that the pipetting head may not drive over samples. As another advantage, the processing time, specifically in the analyzer, may be reduced by reading the identifier of the samples only once.

Further pre-analytical modules may be easily integrated on the primary track, for example a decapping module, a clot detection module and/or a volume detection module. The sample processing system may be configured for handling samples in different sample vessels, such as sample vessels having different vessel geometry, and, thus, the tracks may be designed based on laboratory needs.

Summarizing and without excluding further possible embodiments, the following embodiments may be envisaged:
Embodiment 1: A sample processing system for processing liquid samples, specifically liquid samples of a bodily fluid, the sample processing system comprising:
   i. at least one primary track moving at least one primary sample vessel in a first direction through a transfer region;
   ii. at least one secondary track moving at least one secondary sample vessel in a second direction through the transfer region, the second direction having at least one directional component opposing the first direction;
   iii. at least one automatic pipettor module for liquid transfer between the primary sample vessel and the secondary sample vessel or vice versa in the transfer region;
   iv. at least one analyzer operably connected to the secondary track downstream the transfer region, the analyzer being configured for analyzing a content of the secondary sample vessel after passing the transfer region; and
   v. at least one secondary sample vessel feeding station for automatically feeding the secondary sample vessel into the secondary track.
Embodiment 2: The sample processing system according to the preceding embodiment, wherein the primary and secondary tracks each comprise at least one vessel carrier for receiving the primary and secondary sample vessels, respectively.
Embodiment 3: The sample processing system according to the preceding embodiment, wherein the primary and secondary tracks each comprise transport devices for moving the vessel carriers along the primary and secondary tracks, respectively.
Embodiment 4: The sample processing system according to any one of the preceding embodiments, wherein the at least one automatic pipettor module is configured for transferring liquid from one or more primary sample vessels into one or more secondary sample vessels or vice versa.
Embodiment 5: The sample processing system according to any one of the preceding embodiments, wherein the at least one automatic pipettor module comprises at least one pipetting module, specifically a plurality of pipetting modules, wherein the at least one pipetting module comprises at least one pipetting head transfer line, at least one pipetting head and at least one pipette, wherein the pipetting head transfer line extends at least from the primary track at least to the secondary track, wherein the pipetting head is movable along the pipetting head transfer line and wherein the pipette is connected to the pipetting head.
Embodiment 6: The sample processing system according to the preceding embodiment, wherein the automatic pipettor module comprises a plurality of pipetting modules, wherein the plurality of pipetting heads comprised by the plurality of pipetting modules are movable independently from each other.
Embodiment 7: The sample processing system according to any one of the preceding embodiments, further comprising:
   vi. at least one sample buffer for storing one or more primary sample vessels.
Embodiment 8: The sample processing system according to the preceding embodiment, wherein the at least one primary track comprises the at least one sample buffer.
Embodiment 9: The sample processing system according to the preceding embodiment, wherein the at least one sample buffer is configured for storing one or more primary sample vessels, specifically after being moved through the transfer region.
Embodiment 10: The sample processing system according to any one of the preceding embodiments, further comprising:
   vii. at least one control unit for controlling the functionality of the sample processing system.
Embodiment 11: The sample processing system according to any one of the preceding embodiments, wherein the primary sample vessel comprises at least one sample of a bodily fluid, specifically at least one of: blood; blood serum; blood plasma; lysed whole blood.
Embodiment 12: The sample processing system according to the preceding embodiment, wherein the secondary sample vessel contains at least one of an aliquot, a pool or a fraction of one or more samples of the bodily fluid comprised by one or more primary sample vessels.
Embodiment 13: The sample processing system according to any one of the preceding embodiments, wherein the primary and secondary tracks are configured for moving the primary and secondary sample vessels, respectively, through the transfer region in a stepwise fashion, such that, in each step, a group of one or more primary sample vessels is assigned to a group of one or more secondary vessels in the transfer region.
Embodiment 14: The sample processing system according to the preceding embodiment, wherein the primary and secondary tracks move with a primary and a secondary stepping frequency, respectively.
Embodiment 15: The sample processing system according to the preceding embodiment, wherein a relative ratio of the primary to the secondary stepping frequency at least partially determines the functionality of the sample processing system, specifically with regard to the functionality of pooling, dispensing and/or splitting the liquid sample from the at least one primary sample vessel into the at least one secondary sample vessel or vice versa.
Embodiment 16: The sample processing system according to any one of the two preceding embodiments, wherein the control unit is configured for controlling the primary and secondary stepping frequency of the primary and secondary track, respectively, specifically independently from each other.
Embodiment 17: The sample processing system according to any one of the preceding embodiments, wherein the at least one analyzer comprises at least one of: a nucleic acid test analyzer; a nucleic acid amplification test analyzer.
Embodiment 18: The sample processing system according to any one of the preceding embodiments, wherein at least part of the primary track forms a self-contained pathway, specifically a loop.
Embodiment 19: The sample processing system according to any one of the preceding embodiments, wherein the primary and secondary sample vessels comprise at least one of: a sample container; a sample tube; a sample box.
Embodiment 20: The sample processing system according to any one of the preceding embodiments, wherein the primary and secondary sample vessel are moved individually through the sample processing system via the primary and secondary tracks, respectively.
Embodiment 21: The sample processing system according to any one of the preceding embodiments, further comprising identifiers for identifying the primary and secondary sample vessels.
Embodiment 22: The sample processing system according to the preceding embodiment, wherein the identifiers each comprise at least one item of information, the item of information being selected from the group consisting of: an item of type information providing information on a type of the liquid sample; an item of identification information providing information for identifying the liquid sample; an item of level information providing information on a level of the liquid sample; an item of composition information providing information of a composition of the liquid sample; an item of status information providing information on a state of the liquid sample.
Embodiment 23: The sample processing system according to any one of the two preceding embodiments, wherein the identifiers comprise at least one of: a barcode; a QR-code; a RFID tag; a GPS code.
Embodiment 24: The sample processing system according to any one of the three preceding embodiments, wherein the sample processing system comprises at least one reading device, specifically at least one of a camera, a barcode reader or an RFID scanner, wherein the reading device is configured for reading the identifiers comprised by the primary and/or secondary sample vessels, respectively.
Embodiment 25: The sample processing system according to any one of the preceding embodiments, wherein the sample processing system further comprises at least one sample input and at least one sample output in each of the primary and secondary track.
Embodiment 26: The sample processing system according to the preceding embodiment, wherein the at least one sample input of the primary track is loadable with the at least one primary sample vessel, specifically manually or automatically, specifically with the primary sample vessel containing the at least one sample of a bodily fluid, and wherein the at least one sample output of the primary track provides an outlet for the primary sample vessel.
Embodiment 27: The sample processing system according to any one of the two preceding embodiments, wherein the at least one sample input of the secondary track comprises the at least one secondary sample vessel feeding station, and wherein the sample output of the secondary track provides a sample waste for the at least one secondary sample vessel, specifically being located downstream the at least one analyzer connected to the secondary track.
Embodiment 28: The sample processing system according to any one of the preceding embodiments, wherein the primary and secondary tracks comprise at least one primary and secondary conveyor tracks, respectively.
Embodiment 29: A method of processing at least one liquid sample, the method comprising:
   a. providing at least one sample processing system according to any one of the preceding embodiments;
   b. providing at least one primary sample vessel to at least one sample input of the primary track, the primary sample vessel containing the liquid sample, specifically a liquid sample of a bodily fluid;
   c. moving the primary sample vessel through the transfer region via the primary track;
   d. feeding at least one secondary sample vessel automatically into the secondary track by using at least one secondary sample vessel feeding station;
   e. moving the secondary sample vessel through at least one transfer region via the at least one secondary track; and
   f. pipetting at least part of the liquid sample from at least one primary sample vessel into one or more secondary sample vessels.
Embodiment 30: The method according to the preceding embodiment, further comprising:
   g. identifying the primary sample vessel by reading at least one identifier assigned to the primary sample vessel.
Embodiment 31: The method according to any one of the preceding method embodiments, further comprising:
   h. storing the at least one primary sample vessel in at least one sample buffer comprised by the primary track.
Embodiment 32: The method according to any one of the preceding method embodiments, further comprising:
   i. moving the secondary sample vessel to the analyzer.
Embodiment 33: The method according to the preceding embodiment, further comprising:
   j. analyzing a content of the secondary sample vessel.
Embodiment 34: A use of the sample processing system according to any one of the preceding embodiments referring to a sample processing system, for a purpose of use selected from the group consisting of: pooling liquid samples from at least one primary sample vessel into at least one secondary sample vessel; dispensing liquid samples from at least one primary sample vessel into at least one secondary sample vessel; splitting liquid samples from at least one primary sample vessel into at least one secondary sample vessel.
Embodiment 35: A use of the sample processing system according to any one of the preceding embodiments referring to a sample processing system, for a purpose of use selected from the group consisting of: nucleic acid testing; serological testing; immunoassay; blood screening; blood plasma screening; lysed whole blood screening.

### Short description of the Figures

Further optional features and embodiments will be disclosed in more detail in the subsequent description of embodiments, preferably in conjunction with the dependent claims. Therein, the respective optional features may be realized in an isolated fashion as well as in any arbitrary feasible combination, as the skilled person will realize. The scope of the invention is not restricted by the preferred embodiments. The embodiments are schematically depicted in the Figures. Therein, identical reference numbers in these Figures refer to identical or functionally comparable elements.

In the Figures:
- Figure 1: shows an embodiment of a sample processing system in a schematic view;
- Figure 2: shows a detailed view of an embodiment of the automatic pipettor module comprised by the sample processing system; and
- Figure 3: shows a flow chart of an embodiment of a method of processing at least one liquid sample.

### Detailed description of the embodiments

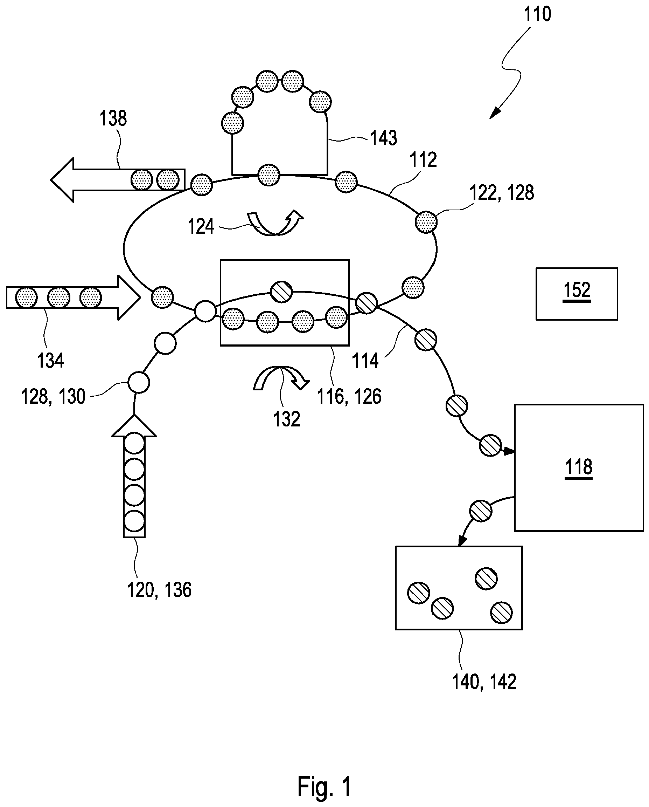

In Figure 1, an embodiment of a sample processing system 110 is shown in a schematic view. The sample processing system 110 comprises at least one primary track 112, at least one secondary track 114 and at least one pipettor module 116. Further, the sample processing system 110 comprises at least one analyzer 118 and at least one secondary sample vessel feeding station 120.

The primary track 112 is configured for moving at least one primary sample vessel 122 through the sample processing system 110. Specifically, the primary track 112 moves the primary sample vessel 122 in a first direction 124 through a transfer region 126. The at least one pipettor module 116 specifically may be located in the transfer region 126. The first direction 124 is indicated in Figure 1 by an arrow pointing in the moving direction of the primary track 112. The primary sample vessel 122 may contain at least one liquid sample, for example a liquid sample of a bodily fluid. The primary sample vessels 122 are shown in Figure 1 as filled circles. Further, the primary track 112 may comprise at least one vessel carrier 128 for receiving the primary sample vessels 122. Further, the primary track 112 may comprise transport devices for moving the vessel carriers 128 along the primary track 112.

The secondary track 114 is configured for moving at least one secondary sample vessel 130 through the sample processing system 110. Specifically, the secondary track 114 may move the secondary sample vessel 130 in a second direction 132 through the transfer region 126. The second direction 132 is indicated in Figure 1 by an arrow pointing in the moving direction of the secondary track 114. The second direction 132 may have at least one directional component opposing the first direction 124, specifically in the transfer region 126. The secondary track 114 may also comprise at least one vessel carrier 128 for receiving the secondary sample vessel 130. Further, the secondary track 114 may comprise transport devices for moving the vessel carriers 128 along the secondary track 114. Specifically, the first direction 124 and the second direction 132 may be oriented counterclockwise.

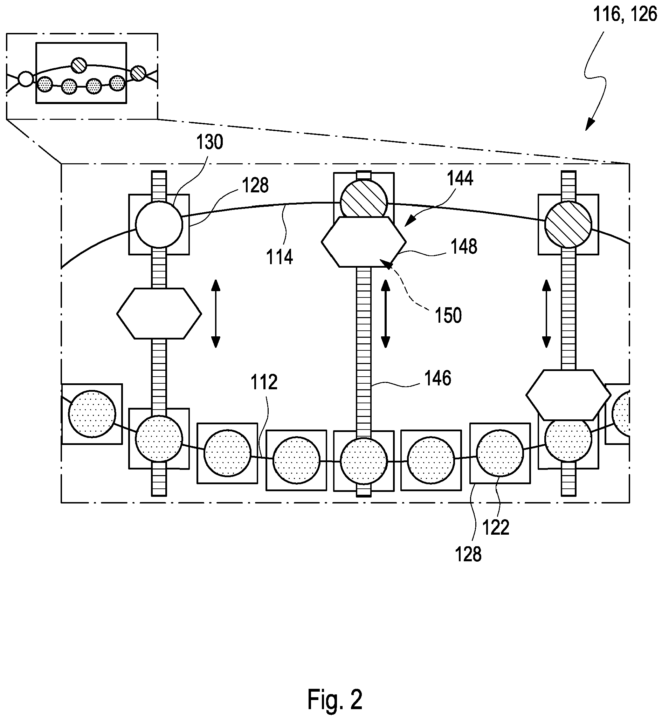

The automatic pipettor module 116 is configured for liquid transfer between the primary 122 and secondary sample vessel 130 or vice versa in the transfer region 126. An exemplary embodiment of the automatic pipettor module 116 is shown in a more detailed view in Figure 2 and will be described in further detail below.

The sample processing 110 system further comprises the at least one secondary sample vessel feeding station 120. The secondary sample vessel feeding station 120 is configured for automatically feeding the secondary sample vessels 130 into the secondary track 114. Specifically, the secondary sample vessel feeding station 120 may feed empty secondary sample vessels 130 from at least one storage to a sample input 136 of the secondary track 114.

The at least one empty secondary sample vessel 130 may be moved via the secondary track 114 to the transfer region 126 and the automatic pipettor module 116. In the transfer region 126, a group of one or more primary sample vessels 122 containing a liquid sample of a bodily fluid may be assigned to a group of one or more secondary vessels 130. Thus, the automatic pipettor module 116 may be configured for transferring one or more liquid samples from one or more primary sample vessels 122 to one or more secondary sample vessels 130. The liquid transfer may be dependent on the primary and secondary stepping frequency, respectively. Therefore, the secondary sample vessels 130 may contain an aliquot, a pool or a fraction of one or more liquid samples of a bodily fluid contained by one or more primary sample vessels 122. In Figure 1, the empty secondary vessels 130 are shown as empty circles, whereas the primary sample vessels 122 containing the liquid sample of a bodily fluid are shown as filled circles. The secondary sample vessels 130 containing an aliquot, a pool or a fraction of one or more liquid samples of a bodily fluid are shown as shaded circles.

Further, the sample processing system 110 may comprise at least one sample input 134, 136 and at least one sample output 138, 140 in each of the primary 112 and secondary track 114. The sample input 134 of the primary track 112 may be loadable with the primary sample vessels 122. Specifically, the primary sample vessels 122 may be provided manually and/or automatically to the primary track 112 via the sample input 134 of the primary track 112. As outlined above, the secondary sample vessel 130 may be provided automatically to the secondary track 114 via the secondary sample vessel feeding station 120. Thus, the secondary sample vessel feeding station 120 may be or may comprise the sample input 136 of the secondary track 114.

After processing the liquid samples, the primary sample vessels 122 may be removable from the sample processing system 110 via the sample output 138 of the primary track 112. The secondary sample vessels 130 may be transferred to the sample output 140 of the secondary track 114, which specifically may provide a sample waste 142 for the secondary sample vessels 130.

Further, the primary track 112 of the sample processing system 110 may comprise at least one sample buffer 143. The sample buffer 143 may be configured for storing one or more primary sample vessels 122. The sample buffer 143, as exemplarily shown herein, may contain a side track branching off from a main track of the primary track 112 or bypassing a part of the primary track 112. The sample buffer 143 may be cooled or may be a fridge and, thus, may be configured for storing the primary sample vessels 122 permanently. The primary sample vessels 122 stored in the sample buffer 143 may be moved via the primary track 112 to the sample output 138 of the primary track 112 or, in case of reusing the liquid sample contained by the primary sample vessel 122, to the transfer region 126.

Further, the sample processing system 110 may comprise at least one control unit 152. The control unit 152 may be configured, specifically by software programming, for controlling the functionality of the sample processing system 110. For example, the control unit 152 may be configured for controlling the movement of the primary 122 and secondary sample vessel 130 via the primary 112 and secondary track 114, respectively. Further, the control unit 152 may be configured for controlling the automatic pipettor module 116. As another example, the control unit 152 may be configured for controlling a reading device, which is configured for reading the at least one identifier comprised by the primary 122 and/or secondary sample vessel 130.

As outlined above, Figure 2 shows a detailed view of an exemplary embodiment of the transfer region 126 and of the automatic pipettor module 116. The automatic pipettor module 116 may comprise at least one pipetting module 144. The pipetting module 144 may comprise at least one pipetting head transfer line 146, at least one pipetting head 148 and at least one pipette 150, which is not visible in Figure 2. For example, the automatic pipettor module 116 may comprise a plurality of pipetting modules 144, whereas each of the pipetting module 144 may be movable independently from each other.

The pipette 150 may be connected to the pipetting head 148. The pipetting head 148 may be movable along the pipetting transfer line 146. Further, the pipetting transfer line 146 may extend at least from the primary track 112 at least to the secondary track 114.

The pipetting module 144 may be configured for transferring liquid samples from the primary sample vessel 122 to the secondary sample vessel 130 or vice versa. For example, the pipette 150 may be configured for taking in the liquid sample of the bodily fluid from the primary sample vessel 122. Further, the pipetting head 148 may move along the pipetting head transfer line 146 to the secondary sample vessel 130, where the pipette 150 may release at least part of the liquid sample.

As outlined above, the automatic pipettor module 116 may be or may comprise the transfer region 126. Further, the primary sample vessels 122 and secondary sample vessels 130 may be moved through the transfer region 126 with a first and second stepping frequency via the primary 112 and secondary track 114, respectively. The relative ration of the primary to the secondary stepping frequency may at least partially determine the functionality of the sample processing system 110, specifically with regard to the functionality of pooling, dispensing and/or splitting the liquid sample from one or more primary sample vessels 122 to one or more secondary sample vessels 130.

For example, if both tracks, the primary 112 and secondary track 114 move with the same stepping frequency, the secondary sample vessel 130 may contain an aliquot of the liquid sample contained by the primary sample vessel 122. As another example, if the stepping frequency of the primary track 112 is higher than the stepping frequency of the secondary track 114, the secondary sample vessel 130 may contain a pool of liquid samples contained by a plurality of primary sample vessels 122. As another example, if the stepping frequency of the primary track 112 is lower than the stepping frequency of the secondary track 114, the secondary sample vessel 130 may contain a fraction of the liquid sample contained by the primary sample vessel 122. The functionality of the sample processing system 110 may be controlled by at least one control unit 152.

As can be seen in Figure 2, the pipetting module 144 may not move over different sample vessels, but only in between the primary sample vessel 122 and the secondary sample vessel 130. Thus, the danger of cross contamination between different primary 122 and/or secondary sample vessels 130 may be minimized.

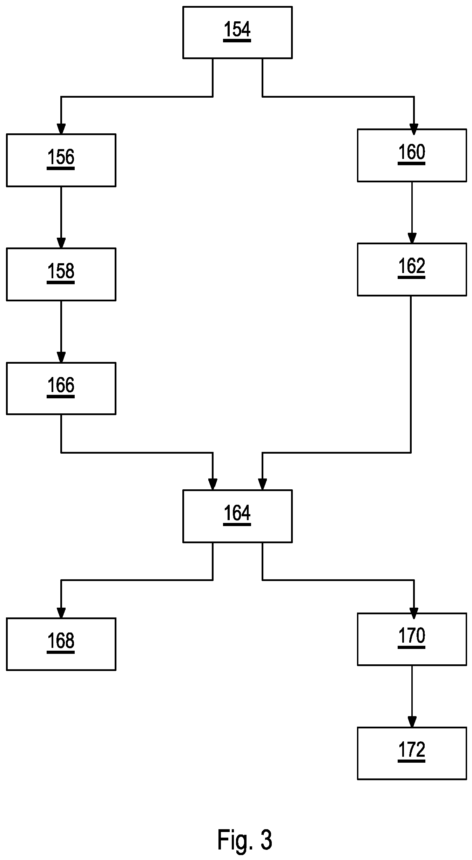

Figure 3 shows a flow chart of an exemplary embodiment of a method of processing at least one liquid sample.

The method comprises the following steps, which may specifically be performed in the given order. Still, a different order may also be possible. It may be possible to perform two or more of the method steps fully or partially simultaneously. It may further be possible to perform one, more than one or even all of the method steps once or repeatedly. The method may comprise additional method steps that are not listed.
The method comprises:
a. (denoted with reference number 154) providing the at least one sample processing system 110 according to the present invention, such as according to any one of the embodiments disclosed above and/or according to any one of the embodiments disclosed in further detail below;
b. (denoted with reference number 156) providing the at least one primary sample vessel 122 to the at least one sample input 134 of the primary track 112, the primary sample vessel 122 containing the liquid sample, specifically a liquid sample of a bodily fluid;
c. (denoted with reference number 158) moving the primary sample vessel 122 through the transfer region 126 via the primary track 112;
d. (denoted with reference number 160) feeding the at least one secondary sample vessel 130 automatically into the secondary track 114 by using the at least one secondary sample vessel feeding station 120;
e. (denoted with reference number 162) moving the secondary sample vessel 130 through at least one transfer region 126 via the at least one secondary track 114; and
f. (denoted with reference number 164) pipetting at least part of the liquid sample from at least one primary sample vessel 122 into one or more secondary sample vessels 130.

Further, as illustrated in Figure 3, the method comprises additional method steps. For example, the method may further comprise:
g. (denoted with reference number 166) identifying the primary sample vessel 122 by reading at least one identifier assigned to the primary sample vessel 122.

Specifically, step g. may be performed in advance of step f. Thus, the sample processing system 110 may comprise a reading device configured for reading the identifier comprised by the primary 122 and secondary sample vessel 130. The reading device may specifically be comprised by the transfer region 126, such that the primary 122 and secondary sample vessel 130 may be identified prior to liquid transfer. Further, the control unit 152 of the sample processing system 110 may be configured for identifying the liquid sample contained by the primary sample vessel 122 and recognizing the content of the secondary sample vessel 130. The item of content information may be assigned to the identifier of the secondary sample vessel 122.
Optionally, the method may further comprise the following step:
h. (denoted with reference number 168) storing the at least one primary sample vessel 122 in the at least one sample buffer 143 comprised by the primary track 112.

Specifically, step h. may be performed subsequent to step f. Thus, the primary sample vessel 122 may be moved to and stored in the sample buffer 143 when the primary sample vessel 122 has been moved through the transfer region 126. In case the primary sample vessel 122 may be used once more, the primary sample vessel 122 may be moved from the sample buffer 143 to the transfer region 126. In case the primary sample vessel 122 may be removed from the sample processing system 110, the primary sample vessel 122 may be moved from the sample buffer 143 to the sample output 138 of the primary track 112.
Further, the method may comprise:
i. (denoted with reference number 170) moving the secondary sample vessel 130 to the analyzer 118;
j. (denoted with reference number 172) analyzing a content of the secondary sample vessel 130.

Specifically, method steps i. and j. may be performed optionally after performing step f. The content of the secondary sample vessel 130 may be an aliquot, a pool or a fraction of one or more liquid samples contained by one or more primary sample vessels 122. Further, step j. comprises using the at least one analyzer 118, specifically a NAT analyzer, of the sample processing system 110.

### List of reference numbers

- 110: sample processing system
- 112: primary track
- 114: secondary track
- 116: automatic pipettor module
- 118: analyzer
- 120: secondary sample vessel feeding station
- 122: primary sample vessel
- 124: first direction
- 126: transfer region
- 128: vessel carrier
- 130: secondary sample vessel
- 132: second direction
- 134: sample input of the primary track
- 136: sample input of the secondary track
- 138: sample output of the primary track
- 140: sample output of the secondary track
- 142: sample waste
- 143: sample buffer
- 144: pipetting module
- 146: pipetting head transfer line
- 148: pipetting head
- 150: pipette
- 152: control unit
- 154: providing at least one sample processing system
- 156: providing at least one primary sample vessel
- 158: moving at least one primary sample vessel through the transfer region
- 160: feeding at least one secondary sample vessel
- 162: moving at least one secondary sample vessel through the transfer region
- 164: pipetting at least part of the liquid sample
- 166: identifying the primary sample vessel
- 168: storing the at least one primary sample vessel
- 170: moving the secondary sample vessel to the analyzer
- 172: analyzing a content of the secondary sample vessel

## Claims

1. A sample processing system (110) for processing liquid samples, comprising:
i. at least one primary track (112) moving at least one primary sample vessel (122) in a first direction (124) through a transfer region (126);
ii. at least one secondary track (114) moving at least one secondary sample vessel (130) in a second direction (132) through the transfer region (126), the second direction (132) having at least one directional component opposing the first direction (124);
iii. at least one automatic pipettor module (116) for liquid transfer between the primary sample vessel (122) and the secondary sample vessel (130) or vice versa in the transfer region (126);
iv. at least one analyzer (118) operably connected to the secondary track (114) downstream the transfer region (126), the analyzer (118) being configured for analyzing a content of the secondary sample vessel (130) after passing the transfer region (126); and
v. at least one secondary sample vessel feeding station (120) for automatically feeding the secondary sample vessel (130) into the secondary track (114).

2. The sample processing system (110) according to the preceding claim, wherein the primary (112) and secondary tracks (114) each comprise at least one vessel carrier (128) for receiving the primary (122) and secondary sample vessels (130), respectively, and wherein the primary (112) and secondary tracks (114) each comprise transport devices for moving the vessel carriers (128) along the primary (112) and secondary tracks (114).

3. The sample processing system (110) according to any one of the preceding claims, wherein the at least one automatic pipettor module (116) comprises at least one pipetting module (144), wherein the at least one pipetting module (144) comprises at least one pipetting head transfer line (146), at least one pipetting head (148) and at least one pipette (150), wherein the pipetting head transfer line (146) extends at least from the primary track (112) at least to the secondary track (114), wherein the pipetting head (148) is movable along the pipetting head transfer line (146) and wherein the pipette (150) is connected to the pipetting head (148).

4. The sample processing system (110) according to any one of the preceding claims, further comprising:
vi. at least one sample buffer (143) for storing one or more primary sample vessels (122).

5. The sample processing system (110) according to any one of the preceding claims, wherein the primary (112) and secondary tracks (114) are configured for moving the primary (122) and secondary sample vessels (130), respectively, through the transfer region (126) in a stepwise fashion, such that, in each step, a group of one or more primary sample vessels (122) is assigned to a group of one or more secondary vessels (130) in the transfer region (126).

6. The sample processing system (110) according to the preceding claim, wherein the primary (112) and secondary tracks (114) move with a primary and a secondary stepping frequency, respectively.

7. The sample processing system (110) according to any one of the preceding claims, wherein the primary (122) and secondary sample vessel (130) are moved individually through the sample processing system (110) via the primary (112) and secondary tracks (114), respectively.

8. The sample processing system (110) according to any one of the preceding claims, further comprising identifiers for identifying the primary (122) and secondary sample vessels (130), wherein the sample processing system (110) comprises at least one reading device, wherein the reading device is configured for reading the identifiers.

9. A method of processing at least one liquid sample, the method comprising:
a. providing at least one sample processing system (110) according to any one of the preceding claims;
b. providing at least one primary sample vessel (122) to at least one sample input (134) of the primary track (112), the primary sample vessel (122) containing the liquid sample;
c. moving the primary sample vessel (122) through the transfer region (126) via the primary track (112);
d. feeding at least one secondary sample vessel (130) automatically into the secondary track (114) by using at least one secondary sample vessel feeding station (120);
e. moving the secondary sample vessel (130) through at least one transfer region (126) via the at least one secondary track (114); and
f. pipetting at least part of the liquid sample from at least one primary sample vessel (122) into one or more secondary sample vessels (130).

10. The method according to the preceding claim, further comprising:
g. identifying the primary sample vessel by reading at least one identifier assigned to the primary sample vessel.

11. The method according to any one of the preceding method claims, further comprising:
h. storing the at least one primary sample vessel (122) in at least one sample buffer (143) comprised by the primary track (112).

12. The method according to any one of the preceding method claims, further comprising:
i. moving the secondary sample vessel to the analyzer.

13. The method according to the preceding claim, further comprising:
j. analyzing a content of the secondary sample vessel (130).

14. A use of the sample processing system (110) according to any one of the preceding claims referring to a sample processing system (110), for a purpose of use selected from the group consisting of: pooling liquid samples from at least one primary sample vessel (122) into at least one secondary sample vessel (130); dispensing liquid samples from at least one primary sample vessel (122) into at least one secondary sample vessel (130); splitting liquid samples from at least one primary sample vessel (122) into at least one secondary sample vessel (130).

15. A use of the sample processing system (110) according to any one of the preceding claims referring to a sample processing system (110), for a purpose of use selected from the group consisting of: nucleic acid testing; serological testing; immunoassay; blood screening; blood plasma screening; lysed whole blood screening.
